# EUROPEAN PATENT APPLICATION

(11) **EP 0 779 165 A2**
(43) Date of publication of application: **18.06.1997**
(21) Application number: 96307575.9
(22) Date of filing: 18.10.1996
(51) Int. Cl.: B60C 27/16

(54) **Tyre antiskid apparatus**

(30) Priority: 13.12.1995 JP 346239/95
(71) Applicant: Car Mate Company Limited, Tokyo (JP)
(72) Inventor: Sakuna, Kiyoshi, c/o Car Mate Co. Ltd., Shinjuku-ku, Tokyo (JP); Mituyasu, Tadashi, c/o Car Mate Co. Ltd., Shinjuku-ku, Tokyo (JP)
(74) Representative: Pacitti, Pierpaolo A.M.E.

(57) **Abstract**

The object of the present invention is to provide a tyre antiskid apparatus which eliminates the disadvantage of conventional tyre antiskid apparatuses.

The conventional apparatus comprises a plurality of non-metallic antiskid members (3), in which the apparatus cannot be installed on the tyres without jacking up the car or moving the tyres onto the chains spread on the ground beforehand.

According to the invention there is provided a tyre antiskid apparatus (2), comprising at least one of a plurality of antiskid members (3) coupled to the tyre outer and inner tightening devices (4, 8) whereby coupling to said tightening devices (4, 8) is achieved through an inclinable joint (7, 9) so that it moves relative to the tightening devices (4, 8).

## Description

The present invention relates to a tyre antiskid apparatus, and in particular, to a non-metallic tyre antiskid apparatus that can be installed and removed easily.

Since conventional metallic tyre antiskid apparatuses have a tyre outer side chain (an outer tightening device) and a tyre inner side chain (an inner tightening device) connected by metallic chains, they can be deformed easily and thus installed on the tyres without jacking up the vehicle or moving the tyres onto chains spread on the ground beforehand.

An example of a conventional metallic tyre antiskid apparatus is shown in Japanese utility Model Laid Open No 2-21003.

An example of a non-metallic tyre antiskid apparatus is shown in Japanese Patent Publication No 5-58921.

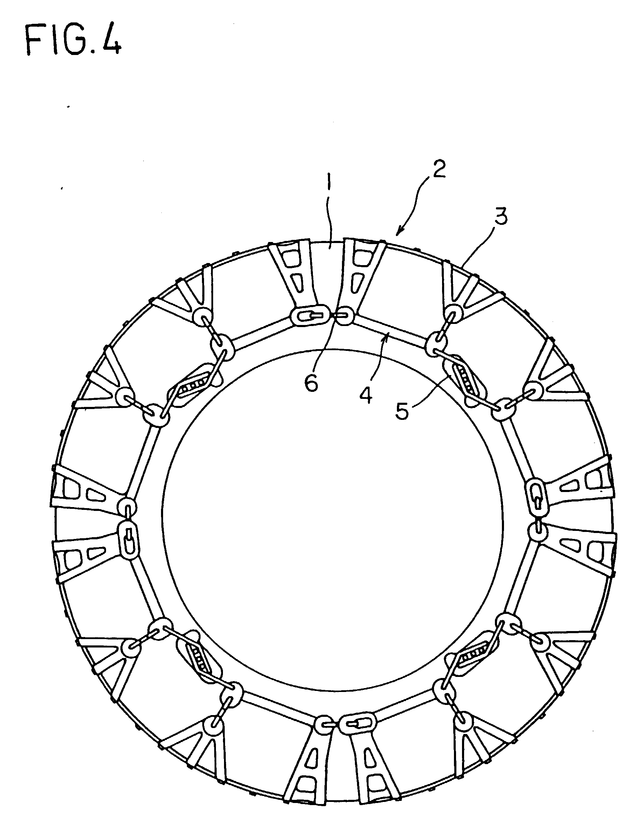

Figure 4 shows such a conventional, non-metallic tyre skid apparatus. In this figure, reference numeral 1 depicts the tyre; 2 is a tyre antiskid apparatus installed on the tyre 1; 3 is a plurality of non-metallic antiskid members of synthetic resin or rubber, constituting the tyre antiskid apparatus 2; 4 is an outer tightening device coupling both the outer ends of each of the antiskid members 3; 5 is a lock member of variable length constituting part of the outer tightening device 4; and 6 is a hook coupling the tyre outer ends of the antiskid members 3.

In such a conventional non-metallic antiskid apparatus however, the tyre outer ends of each antiskid member 3 constituting the tyre antiskid apparatus 2 are fixed directly by the hook 6, so the apparatus cannot be deformed easily. If in particular, the antiskid member 3 is like a net, it must approximately, uniformly cover the overall circumference of the tyre 1, so the vehicle must be jacked up or the tyres must be moved onto the tyre antiskid apparatus 2, which is spread on the ground beforehand, in order to install the apparatus on the tyres.

An objective of the present invention is to provide a tyre antiskid apparatus that eliminates the above disadvantage.

A tyre antiskid apparatus according to this invention comprises a tyre outer tightening device, a tyre inner tightening device, and a plurality of non-metallic antiskid members coupled between said tyre outer tightening device and said tyre inner tightening device, wherein one end of a joint is inclined and coupled to each of the outer and inner surface connection ends of at least one of said antiskid members while the other end is inclined and coupled to each of the outer and inner tightening devices.

The inner tightening device may be a metallic stranded wire.

The joint may preferably be a ring or like a bar.

An embodiment of the present invention will now be described, by way of example only, with reference to the accompanying drawings in which:

Figure 1 is a plan view of a tyre antiskid apparatus according to the present invention.

Figure 2 is a front view of the tyre antiskid apparatus installed on a tyre.

Figure 3 is a rear view of the tyre antiskid apparatus installed on the tyre.

Figure 4 is a front view of a conventional tyre antiskid apparatus installed on a tyre.

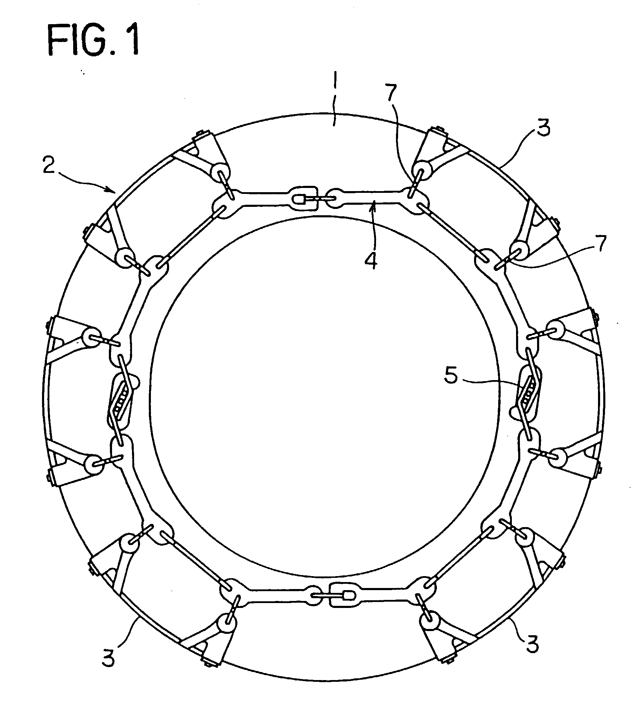

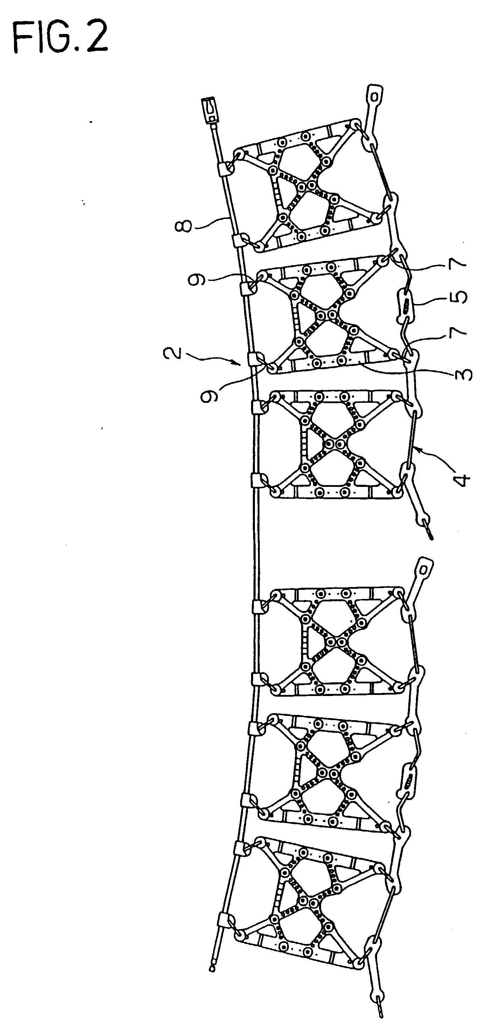

In an embodiment of a tyre antiskid apparatus 2 according to the present invention, a joint 7 is inserted between the tyre outer surface ends of each antiskid member 3 and an outer tightening device 4 to couple them, as shown in Figures 1 and 2.

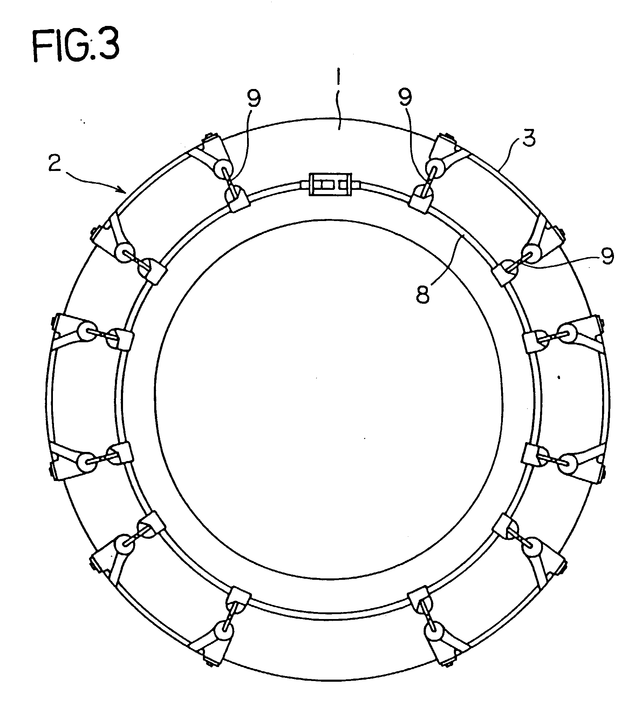

In addition, the inner surface ends of each antiskid member 3 and the inner tightening device 8 are similarly coupled by a ring-like joint 9, as shown in Figure 3.

The inner tightening device 8 is preferably like a string covered with a tube comprising a metallic stranded wire of about 3 to 5 millimetres in diameter that can be deformed easily.

Since the tyre antiskid apparatus 2 according to this invention has the above configuration, each antiskid member 3 can be laterally moved relative to the outer tightening device 4 and the inner tightening device 8 to the extent that joint 7 or 9 can be inclined. This non-metallic apparatus can thus be installed easily on the tyres without jacking up the vehicle or moving the tyres onto chains spread on the ground, this being achieved by moving the antiskid member 3 so as to avoid that part of the tyre which contacts the ground.

In addition, due to the inner tightening device 8 comprising a metallic stranded wire with greater freedom, the tyre antiskid apparatus 2 can be further simply installed on the tyre 1.

Instead of the ring-like joint 7 or 9, a bar-like joint can be used in such a way that one of its ends is inclined and coupled to the tyre outer and inner surface connection ends while the other end is inclined and coupled to said outer tightening device 4 and said inner tightening device 8.

According to this invention, as long as at least one antiskid member 3 can be moved relative to said outer tightening device 4 and said inner tightening device 8, the other antiskid members can be fixed so as not to move relative to said outer tightening device 4 and said inner tightening device 8.

According to this invention, the tyre antiskid apparatus can be installed as easily as with metallic tyre antiskid apparatuses, and the antiskid members can be approximately shaped like a net.

## Claims

1. A tyre antiskid apparatus (2) comprising a tyre outer tightening device (4), a tyre inner tightening device (8), and a plurality of non-metallic antiskid members (3) coupled between said tyre outer tightening device (4) and said tyre inner tightening device (8), wherein one end of a joint (7, 9) is inclined and coupled to each of the inner and outer surface connection ends of at least one of said antiskid members (3) while the other end is inclined and coupled to each of said outer and inner tightening devices (4, 8).

2. A tyre antiskid apparatus (2) according to Claim 1 wherein said inner tightening device (8) is a metallic stranded wire.

3. A tyre antiskid apparatus (2) according to Claim 1 or 2 wherein said joint (7, 9) is a ring.

4. A tyre antiskid apparatus (2) according to Claim 1 or 2, wherein said joint (7, 9) is like a bar.
